(19) Europäisches Patentamt
European Patent Office
Office européen des brevets

(11) **EP 3 510 073 B1**

(12) **EUROPÄISCHE PATENTSCHRIFT**

(45) Veröffentlichungstag und Bekanntmachung des Hinweises auf die Patenterteilung:
**19.05.2021   Patentblatt 2021/20**

(21) Anmeldenummer: **17761899.8**

(22) Anmeldetag: **07.09.2017**

(51) Int Cl.:
*C08G 18/79* (2006.01)     *C08G 18/02* (2006.01)
*C08G 18/38* (2006.01)     *C08K 5/521* (2006.01)
*C08G 101/00* (2006.01)

(86) Internationale Anmeldenummer:
**PCT/EP2017/072441**

(87) Internationale Veröffentlichungsnummer:
**WO 2018/046586 (15.03.2018 Gazette 2018/11)**

(54) **PORÖSE MATERIALIEN AUF POLYURETHAN/POLYISOCYANURATBASIS UND DEREN HERSTELLUNG UND VERWENDUNG**

POROUS MATERIALS ON A POLYURETHANE/POLYISOCYANURATE BASIS AND THEIR PRODUCTION AND USE

MATERIAUX POREUX A BASE DE POLYURETHANE/POLYISOCYANURATE ET LEUR PRODUCTION ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2016   EP 16188070**

(43) Veröffentlichungstag der Anmeldung:
**17.07.2019   Patentblatt 2019/29**

(73) Patentinhaber: **Covestro Intellectual Property GmbH & Co. KG**
**51373 Leverkusen (DE)**

(72) Erfinder:
• **HEINZ, Paul**
  **51375 Leverkusen (DE)**
• **HOFMANN, Jörg**
  **47800 Krefeld (DE)**
• **NEFZGER, Hartmut**
  **50259 Pulheim (DE)**
• **ARNTZ, Hans-Detlef**
  **51491 Overath (DE)**

(74) Vertreter: **Levpat**
**c/o Covestro AG**
**Gebäude 4825**
**51365 Leverkusen (DE)**

(56) Entgegenhaltungen:
EP-A2- 1 555 275     DE-A1- 1 468 293
US-A1- 2014 206 783   US-A1- 2016 215 101

**Beschreibung**

Die Erfindung betrifft poröse Materialien auf Polyurethan-/Polyisocyanuratbasis, deren Herstellung und Verwendung.

Zu den porösen Materialien gehören beispielsweise Xerogele, Aerogele, Cryogele und Lyogele. Xerogele sind beispielsweise poröse Feststoffe mit einer netzwerkartigen Struktur, die aus der Trocknung eines Gels durch Verdampfen des Lösungsmittels hervorgegangen sind. In Abgrenzung zu den Aerogelen weisen Xerogele während der Trocknung erhebliche Strukturänderungen auf, die mit Schrumpfungsprozessen und einer Abnahme der Porosität verbunden sind. Diese liegt bei Xerogelen im Regelfall bei 50% oder mehr, während Aerogele etwa 90% ihres ursprünglichen Volumens behalten.

Die Synthese von porösen Materialien im Sol-Gel-Verfahren bietet die Möglichkeit, nanoporöse Materialien mit außergewöhnlich guten Isoliereigenschaften herzustellen.

Bei einem Einsatz z.B. in der Bauindustrie als Dämmung sind Flammschutzeigenschaften der Dämmung erwünscht. Bei einem Einsatz von porösen Materialien auf Kunststoffbasis ist daher die Verwendung von Flammschutzmitteln notwendig.

Polymerbasierte poröse Materialien, wie z.B. Xerogele stellen eine technisch interessante Materialklasse für Anwendungen im Bereich der Dämmstoffe dar. In weiten Bereichen der Dämmstoffanwendungen gilt es Mindestanforderungen hinsichtlich des Flammschutzes zu erfüllen. Besonders vorteilhaft sind hierbei selbstverlöschende Materialien.

Bei der Herstellung poröser Materialien über den sog. Sol-Gel-Prozess ist es allerdings nicht möglich, gängige, flüssige Flammschutzmittel als Additiv einzusetzen, da diese meist nicht kovalent in die Matrix eingebunden werden und somit als Teil der Lösemittelkomponente entfernt werden. Somit verbleiben sie nicht im resultierenden porösen Material. Feste Flammschutzmittel weisen den Nachteil einer nicht ideal homogenen Verteilung im porösen Material auf und können außerdem bei Löslichkeit im Lösungsmittel mit diesem zusammen ausgetragen werden.

In US 2014/020 6783 A1 werden flammgeschützte poröse Materialien auf Basis von Polyharnstoff beschrieben, die unter Verwendung von polyfunktionellem Isocyanat, polyfunktionellem aromatischem Amin, gegebenenfalls Wasser und Katalysatoren in einem organischen Lösungsmittel unter Zusatz von Organophosphonsäure basierten Verbindungen (z.B. Exolit OP560) hergestellt werden. So erhältliche poröse Materialien weisen Harnstoffgruppen und je nach Kennzahl auch Isocyanuratgruppen als typische Strukturelemente auf. Nachteil dieser porösen Materialien ist, dass die Produkte nur eine niedrige thermische Stabilität aufweisen. Darüber hinaus sind die verwendeten Flammschutzmittel teuer, so dass die damit hergestellten, porösen Materialien gegenüber anderen vergleichbaren Materialien zu kostspielig sind.

Der Einsatz von Hydroxylgruppen-terminierten Polyalkylenphosphaten in Polyurethanen ist auch aus EP 1 555 275 A2 und US 2016/0215101 A1 bekannt. Mit Sol-Gel-Verfahren hergestellte, nanoporöse Materialien mit guten Isolier- und Flammschutzeigenschaften werden jedoch nicht beschrieben.

Daher bestand die Aufgabe darin, flammgeschützte poröse Materialien auf Kunststoffbasis zur Verfügung zu stellen, die die vorgenannten Nachteile nicht aufweisen.

Diese Aufgabe konnte überraschend dadurch gelöst werden, dass ein mit Phosphorsäure gestartetes Polyalkylenoxid-Polyol als isocyanatreaktive Komponente in Kombination mit antrimerisiertem Polyisocyanat unter Verwendung von Urethanisierungskatalysatoren und Trimerisierungskatalysatoren für die Herstellung von Polyurethan/Polyisocyanurat basierten porösen Materialien eingesetzt wird.

Gegenstand der Erfindung sind poröse, selbstverlöschende Materialien auf Basis eines Polyurethan/Polyisocyanuratgemisches mit einer Dichte von $\leq$ 350 kg/ m$^3$, vorzugsweise von 100 bis 350 kg/m$^3$, wobei das Polyurethan/Polyisocyanuratgemisch aus einem Reaktionsgemisch bestehend aus den folgenden Komponenten erhältlich ist

> i) mindestens einer Komponente aus der Gruppe bestehend aus

>> a. einem mit 80 bis 100 gew.-%iger Phosphorsäure gestarteten Polyalkylenoxid-Polyol mit einer OH-Zahl von >200 mg KOH/g,
>> b. einem mit 80 bis 100 gew.-%iger Phosphorsäure und mit einem Polyol mit einer Funktionalität von $\geq$3 bis $\leq$8, vorzugsweise $\geq$3 bis $\leq$6, und einem Molekulargewicht von 92 bis 350 g/mol, bevorzugt 92 bis 200 g/mol, gestarteten Polyalkylenoxid-Polyol mit einer OH-Zahl von >200, vorzugsweise von 250 bis 600, besonders bevorzugt von 280 bis 500 mg KOH/g,
>> c. einem mit Borsäure gestarteten Polyalkylenoxid-Polyol mit einer OH-Zahl von >200, vorzugsweise von 250 bis 600, besonders bevorzugt von 280 bis 500 mg KOH/g
>> d. einem mit Borsäure und mit einem Polyol mit einer Funktionalität von $\geq$3 bis $\leq$8, vorzugsweise $\geq$3 bis $\leq$6, und einem Molekulargewicht von 92 bis 350 g/mol, bevorzugt 92 bis 200 g/mol, gestarteten Polyalkylenoxid-Polyol mit einer OH-Zahl von >200, vorzugsweise von 250 bis 600, besonders bevorzugt von 280 bis 500 mg KOH/g.

> ii) mindestens einem antrimerisierten Polyisocyanat mit einem Isocyanuratgehalt von 15 bis 95 Gew.-%, bevorzugt zwischen 20 und 80 Gew.-%, besonders bevorzugt zwischen 30 und 50 Gew.-%, bezogen auf die Summe der Anzahl der Isocyanatgruppen und der Isocyanuratgruppen, aus der Gruppe bestehend aus Diphenylmethandiisocyanat (MDI), dessen Isomeren und höheren Homologen (pMDI) sowie Mischungen daraus, Toluoldiisocyanat (TDI) und dessen Isomeren und Gemischen daraus, 1,6-Hexamethylendiisocyanat (HDI), Isophorondiisocyanat (IPDI), hydriertes Dipenylmethandiisocyanat (HMDI), dessen Isomeren und höheren Homologen sowie Mischungen daraus, 1,5-Pentandiisocyanat (PDI) und 1,3-Xylendiisocyanat (XDI) sowie Abmischungen aus den Komponenten der Gruppe

in Gegenwart von

iii) mindestens einem Urethanisierungskatalysator

iv) mindestens einem Trimerisierungskatalysator,

wobei die NCO-Kennzahl (das Verhältnis der Anzahl der NCO-Gruppen zu der Anzahl an OH-Gruppen multipliziert mit 100) 200 bis 600 beträgt.

Die erfindungsgemäßen porösen, selbstverlöschenden Materialien können vorzugsweise nach dem Sol-Gel-Verfahren hergestellt werden. Das Sol-Gel-Verfahren ist dem Fachmann an sich bekannt und beispielhaft beschrieben in Schmidt, H. K. (2001), Das Sol-Gel-Verfahren: Anorganische Synthesemethoden. Chemie in unserer Zeit, 35: 176-184. Ein weiterer Gegenstand der Erfindung ist daher ein Sol-Gel-Verfahren zur Herstellung der erfindungsgemäßen porösen, selbstverlöschenden Materialien auf Polyurethan/Polyisocyanuratbasis. Das Sol-Gel Verfahren ist bevorzugt ein solches Sol-Gel-Verfahren, bei dem

a) die Komponenten i) und ii) in einem organischen, trockenen, inerten Lösungsmittel oder Lösungsmittelgemisch vermischt werden,
b) der Mischung aus Schritt a) die Komponente iii) zugegeben wird,
c) zur Mischung aus Schritt b) die Komponente iv) zugegeben wird, so dass sich ein Gel ausbildet,
d) das in Schritt c) gebildete Gel durch Stehenlassen gealtert wird,
e) das organische Lösungsmittel entfernt wird.

Als Lösungsmittel/Lösungsmittelgemisch eignen sich insbesondere organische Lösungsmittel mit einem Siedepunkt von unter 100°C. Die Lösungsmittel sollten trocken sein, also kein Wasser enthalten und gegenüber den Komponenten i) und ii) inert sein, also mit diesen Komponenten nicht reagieren. Die Komponenten sollten im Lösungsmittel löslich sein, wohingegen das gebildete Polymer nicht darin löslich sein sollte. Besonders bevorzugt als Lösungsmittel sind Ketone, wie beispielsweise Aceton, Dichlormethan, Chloroform, Diethylether, Ethylacetat und sonstige an sich bekannte organische Lösungsmittel.

Vor der Entfernung des Lösungsmittels liegen die Gele bevorzugt in einer Konzentration von 5 bis 25 Gew.-%, besonders bevorzugt von 10 bis 20 Gew.-% vor.

Die Alterung kann beispielsweise bei Temperaturen zwischen -20 und 50°C - in Abhängigkeit vom Lösungsmittel - innerhalb von 1 bis 48 Stunden erfolgen.

Die Entfernung des Lösungsmittels kann auf verschiedene Weise erfolgen:

A) Das Lösungsmittel kann z.B. unter Normaldruck oder Unterdruck bei Temperaturen, die über dem Siedepunkt des entsprechenden Lösungsmittels bei eingestelltem Druck liegen, verdampft werden.

B) Das Lösungsmittel wird durch eine andere Flüssigkeit ersetzt, die dann entfernt wird.

C) Das Lösungsmittel wird bei überkritischen Bedingungen entfernt.

D) Das Lösungsmittel wird durch Lyophilisieren entfernt.

Die erfindungsgemäßen porösen Materialien werden vorzugsweise zur Herstellung von Dämmmaterialien, Kernmaterialien für Vakuumisolationspaneele und Absorbentien verwendet.

Als Urethanisierungskatalysatoren können alle an sich bekannten Katalysatoren, die die Urethanbildung katalysieren, eingesetzt werden. Beispiele für derartige Katalysatoren sind im Kunststoffhandbuch, Band 7 (Polyurethane), 3., neu bearbeitete Auflage, Carl Hanser Verlag, München/Wien 1993, Seite 95 bis 119, insbesondere Seite104 ff. beschrieben und können in den üblichen Mengen eingesetzt werden. Sie werden auch in US 4 218 543 oder DE-OS 39 14 718 beschrieben. Beispielhaft seien tertiäre Amine, wie Diazobicyclo[2.2.2]octan, N-Methylimidazol, Dimethylamino- propylamin, 1,5-Diazabicyclo[4.3.0]non-5-en, und 1,8-Diazabicyclo[5.4.0]undec-7-en, sowie metallorganische Verbindungen, wie Titansalze, die Zinn(II)- oder Zinn(IV)-Salze höherer Carbonsäuren, z.B. Dialkylzinnalkylmercaptide, Dialkylzinncarboxylate, Zinn(II)-carboxylate, Dialkoxytitancarboxylate und Titanacetylacetonat, Zinkcarboxylate, sowie Salze des Wismuts genannt.

Als Trimerisierungskatalysatoren können alle an sich bekannten Katalysatoren, die die Trimerisierung des Isocyanates katalysieren, verwendet werden. Besonders geeignet für die Trimerisierung sind spezielle Phosphacyclen mit dreiwertigem P-Atom und salzartig aufgebaute Substanzen mit Kationen, die für eine gute Löslichkeit im Isocyanatmedium sorgen, besonders Tetraorganyl-ammonium und -phosphonium, und Anionen, die sich durch $H^+$-Abstraktion aus schwachen Säuren, wie z.B. Carbonsäuren, Phenolen, Alkoholen, Wasser, HF etc. ableiten. Fluoride, Hydrogendifluoride, Dihydrogentrifluoride und höhere Polyfluoride, wie auch die Anionen spezieller, fluorierte Alkylgruppen tragender Carbonsäuren sind geeignet. Geeignete Trimerisierungskatalysatoren sind weiterhin alkoholische Lösungen von Alkali- und Erdalkalioxiden, -hydroxiden, -alkoholaten sowie -phenolaten. Weiterhin eignen sich alkoholische oder glycolische Lösungen von Metallsalzen von Carbonsäuren, beispielsweise Kaliumacetat, Natriumbenzoat, Natriumacetat und Kaliumformiat sowie ferner tertiäre Phosphine, insbesondere solche, die das Phosphoratom als Teil eines Zyklus enthalten. Als Beispiele seien genannt: Quaternäre Ammoniumhydroxide, vorzugsweise N,N,N-Trimethyl-N-benzylammoniumhydroxid und N,N,N-Trimethyl-N-(2-hydroxypropyl)-ammoniumhydroxid. Quaternäre Ammonium- sowie Phosphonium-fluoride, - difluoride, -trifluoride und höhere -polyfluoride, wie sie durch einfaches Abmischen von quaternären Ammonium- sowie Phosphonium-fluoriden oder auch -hydroxiden mit entsprechenden Anteilen, optional in Alkoholen oder Wasser vorgelöster, HF bereitet werden können.

Die Polyole mit einer Funktionalität ≥3 bis ≤8, die neben Phosphorsäure oder Borsäure als Starter eingesetzt werden können, sind beispielsweise Glycerin, Pentaerythrit, Mono- und Disaccharide, Butantriole, Pentantriole und Hexantriole.

Das Reaktionsgemisch enthält bevorzugt keine Komponenten, welche mit den Polyisocyanaten zu Polyharnstoffen reagieren können. Ganz besonders bevorzugt enthält das Reaktionsgemisch keine isocyanatreaktiven Polyamine.

Beispiele geeigneter Polyisocyanate sind 1,5-Pentandiisocyanat (PDI), 1,6-Hexamethylendiisocyanat (HDI), Isophorondiisocyanat (IPDI), die Isomeren des Bis(-isocyanatocyclohexyl)methans (HMDI) oder deren Mischungen beliebigen Isomerengehalts, 2,4-und/oder 2,6-Toluylendiisocyanat (TDI), 2,2'-und/oder 2,4'- und/oder 4,4'-Diphenylmethandiisocyanat (MDI) und/oder höhere Homologe (pMDI) und 1,3-Bis-(isocyanatomethyl)benzol (XDI). Geeignete Polyisocyanate und Polyisocyanatgemische der Diphenylmethanreihe sind solche Polyisocyanate, wie sie bei der Phosgenierung von Anilin/Formaldehyd-Kondensaten gebildet werden. Der Begriff "Polyisocyanatgemisch der Diphenylmethanreihe" steht für beliebige Gemische von Polyisocyanaten der Diphenylmethanreihe, insbesondere für solche Gemische, die bei der destillativen Auftrennung von Phosgenierungsprodukten von Anilin/Formaldehyd-Kondensaten als Destillationsrückstand anfallen, sowie deren beliebige Abmischungen mit anderen Polyisocyanaten der Diphenylmethanreihe.

Besonders bevorzugt werden als antrimerisiertes Polyisocyanat Gemische aus Polyisocyanat und dessen Polyisocyanurat auf Diphenylmethandiisocyanat(MDI)basis (z.B. 4,4'-MDI, 2,4'-MDI, 2,2'-MDI und deren Abmischungen), gegebenenfalls in Abmischung mit deren höheren Homologen (poly-MDI) oder auf hexamethylendiisocyanat (HDI) basis eingesetzt.

Bevorzugt handelt es sich bei den Polyalkylenoxiden um Polyethylen-, Polypropylen-, Polybutylenoxide und deren Gemische sowie deren Copolymerisate, wie z.B. Polyethylen/Pol ypropylenoxid.

Die Phosphorsäure wird vorzugsweise als konzentrierte Phosphorsäure mit einer Konzentration von 100 Gew.-% oder als wässrige Phosphorsäure mit einer Konzentration von 80 bis <100 Gew.-%, besonders bevorzugt ≥85 bis 98 Gew.-% eingesetzt. Insbesondere bei Einsatz wässriger Phosphorsäure (80 bis <100 Gew.-%) als Starter wird vorzugsweise zusätzlich ein Polyol mit einer Funktionalität von ≥3 bis ≤8, bevorzugt von ≥3 bis ≤6 und einem Molekulargewicht von 92 bis 350, bevorzugt 92 bis 200 g/mol, insbesondere Glyzerin, als Starter eingesetzt.

Die erfindungsgemäßen porösen Materialien können zur Herstellung von Dämmmaterialien, Kernmaterialien für Vakuumisolationspaneele und Absorbentien eingesetzt werden.

Die Erfindung soll anhand der nachfolgenden Beispiele näher erläutert werden.

### Beispiele:

Ausgangsmaterialien:

Polyol 1: mit H3PO4 (100%ig) gestartetes Polyol auf Ethylenoxidbasis mit einer OH-Zahl (OHZ )= 311 mg KOH/g; Säurezahl = 0,03 mg KOH/g; pH = 7,53; Viskosität (25°C) = 515 mPa*s.

Polyol 2: mit H3PO4 (85%ig) und Glyzerin (f=2,75) gestartetes Polyol auf Ethylenoxidbasis mit einer OHZ = 422 mg KOH/g; Säurezahl = 0,24 mg KOH/g; pH = 4,22; Viskosität (25°C)= 227 mPa*s.

Polyol 3: mit Trimethylolpropan gestartetes Polyol auf Ethylenoxidbasis mit einer OHZ = 550 mgKOH/g

Katalysator 1 (Kat1): "Desmorapid® 726b"; Polyurethankatalysator Cyclohexyldimethylamin

Katalysator 2 (Kat2): "Polycat 41"; Polyurethan/Trimerisierungskatalysator 1,3,5-Tris(3-(dimethylamino)propyl)-s -hexahydrotriazin

Katalysator 3 (Kat3): "Dabco TMR"; Trimerisierungskatalysator tert. Amin in Ethylenglycol (25%)

Isocyanatkomponente 1 (Iso1): Desmodur® 44M, 4,4'-Diphenylmethandiisocyanat mit NCO-Gehalt von 33,6 Gew.-%

Isocyanatkomponente 2 (Iso2): Desmodur® 44V20L, sogenanntes technisches Diphenylmethandiisocyanat (mit einem polymeren Anteil) mit einem NCO-Gehalt von 31,5 Gew.-% und einer Viskosität bei 25°C von ca. 200mPas

Herstellung einer Isocyanatmischung A1 (Isocyanatmischung vor Trimerisierung)

Iso1 und Iso2 (Ansatzgröße 3 kg, Gewichtsverhältnis 40:60) wurden in einen 5-1-Dreihalskolben mit Rührer unter Stickstoff überführt und bei Raumtemperatur homogenisiert. Diese Mischung weist eine Viskosität von ca. 25 mPas bei 25°C und einen Isocyanatgehalt von 32,7 Gew.-% auf.

Herstellung des antrimerisierten Polyisocyanates A2 (Isocyanat/Isocyanurat-Gemisch)

Die in Beispiel 1) hergestellte Isocyanatmischung A1 wurde unter Stickstoff auf eine Temperatur von 60-80°C aufgeheizt und unter Katalyse mit 2,4,6-Tris(dimethylaminomethyl)phenol (1500ppm) einer Trimerisierungsreaktion unterworfen. In zeitlichen Intervallen von etwa 15 Minuten wurden dem Reaktionsgemisch Proben zur Bestimmung des Isocyanatgehalts entnommen. Eine unter den Reaktionsbedingungen zeitlich lineare Abnahme des NCO-Werts ermöglichte eine gute Abschätzung der notwendigen Reaktionszeit (ca. 2h) bis zum Erreichen des Ziel-NCO-Werts. Die Reaktion wurde durch Zugabe von Benzoylchlorid (300 ppm) bei Erreichen eines Isocyanatgehalts von 26,9 Gew.-% abgestoppt.

Der Isocyanuratgehalt des so hergestellten Isocyanat/Isocyanuratgemisches A2 wurde aus der NCO-Abnahme nach folgender Rechnung bestimmt:

Isocyanuratgehalt in Gew.-% von (A2) = (Isocyanatgehalt in Gew.-% des Isocyanatgemisches (A1) - Isocyanatgehalt des antrimerisierten Polyisocyanates (A2) in Gew.-% am Reaktionsende ) / (Isocyanatgehalt in Gew.-% von (A1) /2) *100

Der Isocyanuratgehalt von (A2) beträgt 35,6 Gew.-%, und die Viskosität beträgt 2800 mPas bei 25°C.

Herstellung der Phosphor-basierten Polyetherpolyole:

Die Phosphorsäure basierten Polyetherpolyole Polyol1 und Polyol2 wurden analog zu Smith et al. (US 2,830,069) hergestellt. Bei der Herstellung von Polyol1 wurde 100%ige Phosphorsäure und bei der Herstellung von Polyol2 wurde ein Teil der 85%igen Phosphorsäure durch Glycerin ersetzt.

Herstellung von Polyol1:

300,1 g (3,06 mol) Phosphorsäure (100%ig) wurden in einem 21 Edelstahlreaktor vorgelegt und unter Rühren auf 55°C aufgeheizt. Nach mehrmaligem Stickstoff/Vakuum-Austausch zwischen 0,1 und 3,0 bar (absolut) wurde der Druck im Reaktor mittels Stickstoff auf 2,1 bar (absolut) eingestellt. 1450 g (32,9 mol) Ethylenoxid wurden bei einer Temperatur von 55°C mit einer Rate von 200 g/h zugegeben. Nach einer Nachreaktionszeit von 3 Stunden wurde die Reaktionsmischung auf Raumtemperatur abgekühlt und dem Reaktor entnommen. Flüchtige Komponenten wurden bei 90°C unter reduziertem Druck (10 mbar) innerhalb von 30 Minuten destilliert.

Herstellung von Polyol2:

43,9 g 85%-ige Phosphorsäure (0,381 mol Phosphorsäure / 0,367 mol Wasser) wurden zusammen mit 65,9 Glycerin (0,716 mol) in einem 11 Edelstahlreaktor vorgelegt und unter Rühren auf 55°C aufgeheizt. Nach mehrmaligem Stickstoff/Vakuum-Austausch zwischen 0,1 und 3,0 bar (absolut) wurde der Druck im Reaktor mittels Stickstoff auf 2,0 bar (absolut) eingestellt. 440 g Ethylenoxid wurden bei einer Temperatur von 55°C mit einer Rate von 120 g/h zugegeben. Nach einer Nachreaktionszeit von 3 Stunden wurde das Reaktionsmischung auf 90°C aufgeheizt und flüchtige Komponenten wurden unter Vakuum innerhalb von 30 Minuten destilliert.

Herstellung der porösen Materialien auf Polyurethan/Polyisocyanurat-Basis:

Die porösen Materialien wurden über die Herstellung von im Lösungsmittel gequollenen Polymer-Gelen und anschließender Trocknung unter Normalbedingungen erhalten. Für die Herstellung der Gele wurden zuerst aus den verschiedenen oben genannten Komponenten jeweils verdünnte Lösungen (ca.27-30 Gew.-%) unter Verwendung von Aceton als Lösungsmittel hergestellt. Diese Lösungen wurden dann in verschiedenen Kombinationen miteinander vereint, so dass sich die in der Tabelle angegebenen Rezepturen ergaben. Anschließend wurde Aceton bis zur gewünschten Verdünnungsstufe hinzugegeben. In einigen Beispielen (bei einer Kennzahl (KZ) >100) wurde nach einer bestimmten Zeit (1 h) ein weiterer Katalysator (Isocyanurat-Katalysator: Katalysator 2 oder 3) zugesetzt.

Zuerst wurde eine Eintrübung beobachtet, anschließend erfolgte die Gelierung. Das entstandene Gel wurde über Nacht gealtert und anschließend durch Verdampfen des Lösungsmittels bei Raumtemperatur innerhalb von 7 Tagen getrocknet.

Die Gele wurden in zylindrischen PE-Gefäßen mit einem Durchmesser von 60mm und einer Höhe von 150mm hergestellt. Die Gelkörper wurden 24h nach Herstellung aus den Zylindern entnommen und während 7 Tagen bei Raumtemperatur getrocknet. Der Volumenschwund in [%] bezieht sich auf das Volumen des Gelkörpers (Halbmesser$^2$ x Gelhöhe) bezogen auf die Dimension der Form (Halbmesser$^2$ x Füllhöhe).

Die Dichte des Gelkörpers wurde nach der Trocknungszeit von 7 Tagen durch Ausmessen des Gelkörpervolumens (s. o.) und Auswiegen des Körpers bestimmt.

Als Index wird das mit 100 multiplizierte Verhältnis von Isocyanatgruppen zu gegenüber Isocyanatgruppen reaktiven Gruppen bezeichnet:

$$Index = (Mol_{\text{Isocyanat-Gruppen}} / Mol_{\text{Isocyanat-reaktive Gruppen}}) *100$$

Die Bestimmung der Brandeigenschaften erfolgte an den über 7 Tage bei Raumtemperatur getrockneten Gelen nach DIN 4102-1 (05-1998) im Kleinbrennertest. Mit "ja" bewertet wurden die Qualitäten, die innerhalb von 15 Sekunden nach Entfernen des Brenners keine Flammerscheinung zeigten.

| Beispiel | 1 | 2 | 3* | 4* | 5* | 6* | 7* |
|---|---|---|---|---|---|---|---|
| **Komponenten in [Gew.-Teilen]** | | | | | | | |
| A2 | 269,19 | 368,43 | 196,34 | 326,13 | 0 | 0 | 0 |
| Iso2 | 0 | 0 | 0 | 0 | 321,87 | 264,11 | 191,19 |
| Polyol1 | 173,19 | 0 | 252,65 | 0 | 0 | 178,09 | 257,83 |
| Polyol2 | 0 | 151,46 | 0 | 0 | 0 | 0 | 0 |
| Polyol3 | 0 | 0 | 0 | 118,65 | 122,73 | 0 | 0 |
| Kat1 | 13,86 | 9,30 | 20,21 | 9,49 | 9,82 | 13,53 | 19,60 |
| Kat2 | 13,86 | 0 | 0 | 9,49 | 9,82 | 14,25 | 0 |
| Kat3 | 0 | 9,30 | 0 | 0 | 0 | 0 | 0 |
| Aceton | 129,91 | 161,52 | 130,80 | 136,24 | 135,76 | 130,02 | 131,38 |
| Zwischensumme [Gew.-Teile] | 600 | 700 | 600 | 600 | 600 | 600 | 600 |
| Index [NCO:OH] | 200 | 200 | 100 | 200 | 200 | 200 | 100 |
| Zusätzliche Verdünnung mit Aceton auf eine Gew.-Summe von [Gew.- Teile] | 2534 | 2890 | 2528 | 2492 | 2495 | 2533 | 2524 |
| Konzentration der Lösung nach zusätzl. Verdünnung [Gew.-%] | 15 | 15 | 15 | 15 | 15 | 15 | 15 |
| Ergebnisse | | | | | | | |
| Volumenschwund [%] | 40 | 55 | 65 | 40 | 40 | 40 | 63 |
| Dichte [kg/m$^3$] | 235 | 302 | 350 | 200 | 215 | 235 | 360 |
| Brandeigenschaft Selbstverlöschend | Ja | Ja | Nein | Nein | Nein | Nein | Nein |
| *Vergleich | | | | | | | |

Beispiel 1 (erfindungsgemäß):

Es wurde ein poröses selbstverlöschendes Material gemäß obiger Vorschrift hergestellt. Eine Kombination aus Phosphorsäure gestartetem Polyol und antrimerisiertem Polyisocyanat unter Einsatz eines Trimerisierungskatalysators im Anschluss an die Polyurethanbildungsreaktion (KZ 200) führte zu einem selbstverlöschenden Brandverhalten.

Beispiel 2 (erfindungsgemäß):

Wie in Beispiel 1 führte die Verwendung von 85%iger Phosphorsäure als Starter unter gleichzeitiger Zugabe von Glycerin bei der Herstellung des entsprechenden Polyols zu einem selbstverlöschenden, porösen Material.

Beispiel 3 (Vergleich):

Im Vergleich zum Beispiel 1 führte die Verwendung der entsprechenden Ausgangsverbindungen zu einem Polyurethan, das nicht zu einem selbstverlöschenden, porösen Material verarbeitet werden konnte.

Beispiel 4 (Vergleich):

Im Vergleich zum Beispiel 1 führte die Verwendung eines Phosphorsäure-freien Polyols nicht zu einem selbstverlöschenden, porösen Material.

Beispiel 5 (Vergleich):

Im Vergleich zum Beispiel 1 führte die Verwendung eines Isocyanurat-freien Isocyanats und eines Phosphorsäure-freien Polyols nicht zu einem selbstverlöschenden, porösen Material.

Beispiel 6 (Vergleich):

Im Vergleich zum Beispiel 1 führte die Verwendung eines Isocyanurat-freien Isocyanats nicht zu einem selbstverlöschenden, porösen Material.

Beispiel 7 (Vergleich):

Im Vergleich zum Beispiel 1 führte die Verwendung eines Isocyanurat-freien Isocyanats ohne Trimerisierungskatalysator nicht zu einem porösen selbstverlöschenden Material.
Wie der Tabelle zu entnehmen ist, sind sowohl der Trimerisierungskatalysator als auch das antrimerisierte Polyisocyanat neben dem Phosphorsäure gestarteten Polyalkylenoxid-Polyol für die Lösung der Aufgabe erfindungswesentlich.

## Patentansprüche

1. Poröse, selbstverlöschende Materialien auf Basis eines Polyurethan/Polyisocyanuratgemisches mit einer Dichte von $\leq 350$ kg/m$^3$, wobei das Polyurethan/Polyisocyanuratgemisch aus einem Reaktionsgemisch bestehend aus den folgenden Komponenten erhältlich ist

    i) mindestens einer Komponente aus der Gruppe bestehend aus

        a. einem mit 80 bis 100 gew.-%iger Phosphorsäure gestarteten Polyalkylenoxid-Polyol >200 mg KOH/g,
        b. einem mit 80 bis 100 gew.-%iger Phosphorsäure und mit einem Polyol mit einer Funktionalität von $\geq 3$ bis $\leq 8$ und einem Molekulargewicht von 92 bis 350 g/mol gestarteten Polyalkylenoxid-Polyol >200 mg KOH/g,
        c. einem mit Borsäure gestarteten Polyalkylenoxid-Polyol mit einer OH-Zahl von >200 mg KOH/g, und
        d. einem mit Borsäure und einem Polyol mit einer Funktionalität von $\geq 3$ bis $\leq 8$ und einem Molekulargewicht von 92 bis 350 g/mol gestarteten Polyalkylenoxid-Polyol mit einer OH-Zahl von >200 mg KOH/g,
        und

    ii) mindestens einem antrimerisierten Polyisocyanat mit einem Isocyanuratgehalt von 15 bis 95 %, bezogen auf die Summe der Anzahl der Isocyanatgruppen und der Isocyanuratgruppen, aus der Gruppe bestehend aus Diphenylmethandiisocyanat (MDI), dessen Isomeren und höheren Homologen (pMDI) sowie Mischungen daraus, Toluoldiisocyanat (TDI) und dessen Isomeren und Gemischen daraus, 1,6-Hexamethylendiisocyanat (HDI), Isophorondiisocyanat (IPDI), hydriertes Dipenylmethandiisocyanat (HMDI), dessen Isomeren und höheren Homologen sowie Mischungen daraus, 1,5-Pentandiisocyanat (PDI) und 1,3-Xylendiisocyanat (XDI) sowie Abmischungen aus den Komponenten der Gruppe in Gegenwart von

iii) mindestens einem Urethanisierungskatalysator

iv) mindestens einem Trimerisierungskatalysator,

wobei die NCO-Kennzahl (das Verhältnis der Anzahl der NCO-Gruppen zu der Anzahl an OH-Gruppen multipliziert mit 100) 200 bis 600 beträgt.

2. Poröse, selbstverlöschende Materialien gemäß Anspruch 1 mit einer Dichte von 100 bis 350 kg/m$^3$.

3. Poröse, selbstverlöschende Materialien gemäß Anspruch 1 oder 2, wobei die Komponente i) mindestens ein mit 100 gew.-%iger Phosphorsäure gestartetes Polyalkylenoxid-Polyol mit einer OH-Zahl von >200, vorzugsweise von 250 bis 600 mgKOH/g ist.

4. Poröse, selbstverlöschende Materialien gemäß Anspruch 1 oder 2, wobei die Komponente i) mindestens ein mit 80 bis 100 gew.-%iger Phosphorsäure und mit einem Polyol mit einer Funktionalität von ≥3 bis ≤6 und einem Molekulargewicht von 92 bis 200 g/mol, gestartetes Polyalkylenoxid-Polyol mit einer OH-Zahl von >250 bis 600 mgKOH/g ist.

5. Poröse, selbstverlöschende Materialien gemäß Anspruch 1 oder 2, wobei die Komponente i) mindestens ein mit Borsäure gestartetes Polyalkylenoxid-Polyol mit einer OH-Zahl von >250 bis 600 mgKOH/g ist.

6. Poröse, selbstverlöschende Materialien gemäß Anspruch 1 oder 2, wobei die Komponente i) mindestens ein mit Borsäure und mit einem Polyol mit einer Funktionalität von ≥3 bis ≤6 und einem Molekulargewicht von 92 bis 200 g/mol, gestartetes Polyalkylenoxid-Polyol mit einer OH-Zahl von 250 bis 600 mgKOH/g ist.

7. Poröse, selbstverlöschende Materialien gemäß einem der vorangehenden Ansprüche, wobei die Komponente ii) mindestens ein antrimerisiertes Polyisocyanat mit einem Isocyanuratgehalt von 15 bis 95 %, bezogen auf die Summe der Anzahl der Isocyanatgruppen und der Isocyanuratgruppen, auf Basis von Diphenylmethandiisocyanat (MDI), dessen Isomeren und höheren Homologen (pMDI) sowie Mischungen daraus ist.

8. Poröse, selbstverlöschenden Materialien gemäß einem der Ansprüche 1 - 7, **dadurch gekennzeichnet, dass** sie mittels Sol-Gel-Verfahren hergestellt sind.

9. Sol-Gel-Verfahren zur Herstellung der porösen, selbstverlöschenden Materialien auf Polyurethan/Polyisocyanuratbasis gemäß einem der Ansprüche 1 bis 9, wobei

a) die Komponenten i) und ii) in einem organischen, trockenen, inerten Lösungsmittel oder Lösungsmittelgemisch vermischt werden,
b) der Mischung aus Schritt a) die Komponente iii) zugegeben wird,
c) zur Mischung aus Schritt b) die Komponente iv) zugegeben wird, so dass sich ein Gel ausbildet,
d) das in Schritt c) gebildete Gel durch Stehenlassen gealtert wird,
e) das organische Lösungsmittel entfernt wird.

10. Verwendung der porösen, selbstverlöschenden Materialien gemäß einem der Ansprüche 1 bis 8 zur Herstellung von Dämmmaterialien, Kernmaterialien für Vakuumisolationspaneele und Absorbentien.

**Claims**

1. Porous self-extinguishing materials based on a polyurethane/polyisocyanurate mixture with density ≤ 350 kg/m$^3$, where the polyurethane/polyisocyanurate mixture is obtainable from a reaction mixture consisting of the following components:

i) at least one component from the group consisting of:

a. a polyalkylene oxide polyol >200 mg KOH/g, started with phosphoric acid of strength from 80 to 100% by weight,

b. a polyalkylene oxide polyol >200 mg KOH/g, started with phosphoric acid of strength from 80 to 100% by weight and with a polyol of functionality from ≥3 to ≤8 and of molar mass from 92 to 350 g/mol,

c. a polyalkylene oxide polyol with OH number >200 mg KOH/g, started with boric acid, and

d. a polyalkylene oxide polyol with OH number >200 mg KOH/g, started with boric acid and with a polyol of functionality from ≥3 to ≤8 and of molar mass from 92 to 350 g/mol,

and

ii) at least one incipiently trimerized polyisocyanate with from 15 to 95% isocyanurate content, based on the sum of the number of isocyanate groups and of isocyanurate groups, from the group consisting of diphenylmethane diisocyanate (MDI), its isomers and higher homologs (pMDI) and mixtures thereof, toluene diisocyanate (TDI) and its isomers and mixtures thereof, hexamethylene 1,6-diisocyanate (HDI), isophorone diisocyanate (IPDI), hydrogenated diphenylmethane diisocyanate (HMDI), its isomers and higher homologs and mixtures thereof, pentane 1,5-diisocyanate (PDI) and xylene 1,3-diisocyanate (XDI) and mixtures of the components of the group

in the presence of

iii) at least one urethanization catalyst and

iv) at least one trimerization catalyst,

where the NCO index (the ratio of the number of NCO groups to the number of OH groups multiplied by 100) is from 200 to 600.

2. Porous self-extinguishing materials according to Claim 1 with density from 100 to 350 kg/m$^3$.

3. Porous self-extinguishing materials according to Claim 1 or 2, where component i) is at least one polyalkylene oxide polyol with OH number >200 mg KOH/g, preferably from 250 to 600 mg KOH/g, started with phosphoric acid of strength 100% by weight.

4. Porous self-extinguishing materials according to Claim 1 or 2, where component i) is at least one polyalkylene oxide polyol with OH number from >250 to 600 mg KOH/g, started with phosphoric acid of strength from 80 to 100% by weight and with a polyol of functionality from ≥3 to ≤6 and of molar mass from 92 to 200 g/mol.

5. Porous self-extinguishing materials according to Claim 1 or 2, where component i) is at least one polyalkylene oxide polyol with OH number from >250 to 600 mg KOH/g, started with boric acid.

6. Porous self-extinguishing materials according to Claim 1 or 2, where component i) is at least one polyalkylene oxide polyol with OH number from 250 to 600 mg KOH/g, started with boric acid and with a polyol of functionality from ≥3 to ≤6 and of molar mass from 92 to 200 g/mol.

7. Porous self-extinguishing materials according to any of the preceding claims, where component ii) is at least one incipiently trimerized polyisocyanate with from 15 to 95% isocyanurate content, based on the sum of the number of isocyanate groups and of isocyanurate groups, based on diphenylmethane diisocyanate (MDI), its isomers and higher homologs (pMDI) and mixtures thereof.

8. Porous self-extinguishing materials according to any of Claims 1-7, **characterized in that** they have been produced by means of sol-gel processes.

9. Sol-gel process for the production of the porous self-extinguishing materials according to any of Claims 1 to 9, based on polyurethane/polyisocyanurate, where

a) components i) and ii) are mixed in an inert, dry, organic solvent or solvent mixture,

b) component iii) is added to the mixture from step a),

c) component iv) is added to the mixture from step b), thus forming a gel,

d) the gel formed in step c) is aged by standing,

e) the organic solvent is removed.

10. Use of the porous self-extinguishing materials according to any of Claims 1 to 8 for the production of insulation materials, core materials for vacuum insulation panels and absorbents.

**Revendications**

1. Matériaux poreux auto-extinguibles à base d'un mélange de polyuréthane/polyisocyanurate comportant une densité de ≤ 350 kg/m$^3$, le mélange de polyuréthane/polyisocyanurate pouvant être obtenu à partir d'un mélange réactionnel constitué des composants suivants

   i) au moins un composant du groupe constitué par

       a. un poly(oxyde d'alkylène)-polyol de > 200 mg de KOH/g amorcé avec de l'acide phosphorique d'une concentration de 80 à 100 % en poids,
       b. un poly(oxyde d'alkylène)-polyol de > 200 mg de KOH/g amorcé avec de l'acide phosphorique d'une concentration de 80 à 100 % en poids et avec un polyol doté d'une fonctionnalité de ≥ 3 à ≤ 8 et d'un poids moléculaire de 92 à 350 g/mole,
       c. un poly(oxyde d'alkylène)-polyol doté d'un indice d'OH de > 200 mg de KOH/g et amorcé avec de l'acide borique, et
       d. un poly(oxyde d'alkylène)-polyol doté d'un indice d'OH de > 200 mg de KOH/g et amorcé avec de l'acide borique et un polyol doté d'une fonctionnalité de ≥ 3 à ≤ 8 et d'un poids moléculaire de 92 à 350 g/mole, et

   ii) au moins un polyisocyanate trimérisé doté d'une teneur en isocyanurate de 15 à 95 %, par rapport à la somme du nombre de groupes isocyanate et de groupes isocyanurate, du groupe constitué par un diisocyanate de diphénylméthane (MDI), ses isomères et homologues supérieurs (pMDI) ainsi que des mélanges de ceux-ci, un diisocyanate de toluène (TDI) et ses isomères et des mélanges correspondants, le 1,6-diisocyanate d'hexaméthylène (HDI), un diisocyanate d'isophorone (IPDI), un diisocyanate de diphénylméthane hydrogéné (HMDI), ses isomères et homologues supérieurs ainsi que des mélanges de ceux-ci, le 1,5-diisocyanatopentane (PDI) et un 1,3-diisocyanate de xylène (XDI) ainsi que les mélanges des composants du groupe en présence de
   iii) au moins un catalyseur de formation d'uréthane,
   iv) au moins un catalyseur de trimérisation, l'indice de NCO (le rapport du nombre de groupes NCO sur le nombre de groupes OH multiplié par 100) étant de 200 à 600.

2. Matériaux poreux auto-extinguibles selon la revendication 1 dotés d'une densité de 100 à 350 kg/m$^3$.

3. Matériaux poreux auto-extinguibles selon la revendication 1 ou 2, le composant i) étant au moins un poly(oxyde d'alkylène)-polyol doté d'un indice d'OH de > 200, préférablement de 250 à 600 mg de KOH/g, amorcé avec de l'acide phosphorique d'une concentration de 100 % en poids.

4. Matériaux poreux auto-extinguibles selon la revendication 1 ou 2, le composant i) étant au moins un poly(oxyde d'alkylène)-polyol doté d'un indice d'OH de > 250 à 600 mg de KOH/g, amorcé avec de l'acide phosphorique d'une concentration de 80 à 100 % en poids et avec un polyol doté d'une fonctionnalité de ≥ 3 à ≤ 6 et d'un poids moléculaire de 92 à 200 g/mole.

5. Matériaux poreux auto-extinguibles selon la revendication 1 ou 2, le composant i) étant au moins un poly(oxyde d'alkylène)-polyol doté d'un indice d'OH de > 250 à 600 mg de KOH/g, amorcé avec de l'acide borique.

6. Matériaux poreux auto-extinguibles selon la revendication 1 ou 2, le composant i) étant au moins un poly(oxyde d'alkylène)-polyol doté d'un indice d'OH de 250 à 600 mg de KOH/g, amorcé avec de l'acide borique et avec un polyol doté d'une fonctionnalité de ≥ 3 à ≤ 6 et d'un poids moléculaire de 92 à 200 g/mole.

7. Matériaux poreux auto-extinguibles selon l'une quelconque des revendications précédentes, le composant ii) étant au moins un polyisocyanate trimérisé doté d'une teneur en isocyanurate de 15 à 95 %, par rapport à la somme du nombre de groupes isocyanate et de groupes isocyanurate, à base de diisocyanate de diphénylméthane (MDI), de ses isomères et homologues supérieurs (pMDI) ainsi que de mélanges de ceux-ci.

8. Matériaux poreux auto-extinguibles selon l'une quelconque des revendications 1 à 7, **caractérisés en ce qu'**ils sont préparés au moyen d'un procédé sol-gel.

9. Procédé sol-gel pour la préparation des matériaux poreux auto-extinguibles selon l'une quelconque des revendications 1 à 9,

a) les composants i) et ii) étant mélangés dans un solvant ou un mélange de solvants organique, sec, inerte,
b) le composant iii) étant ajouté au mélange de l'étape a),
c) le composant iv) étant ajouté au mélange de l'étape b) de sorte qu'un gel soit formé,
d) le gel formé dans l'étape c) étant vieilli en le laissant reposer,
e) le solvant organique étant éliminé.

**10.** Utilisation des matériaux poreux auto-extinguibles selon l'une quelconque des revendications 1 à 8 pour la préparation de matériaux d'isolation, de matériaux de noyau pour des panneaux d'isolation sous vide et des absorbants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140206783 A1
- EP 1555275 A2
- US 20160215101 A1
- US 4218543 A
- DE OS3914718 A
- US 2830069 A

**In der Beschreibung aufgeführte Nicht-Patentliteratur**

- **SCHMIDT, H. K.** Das Sol-Gel-Verfahren: Anorganische Synthesemethoden. *Chemie in unserer Zeit,* 2001, vol. 35, 176-184
- Katalysatoren sind im Kunststoffhandbuch. Polyurethane. Carl Hanser Verlag, München/Wien, 1993, vol. 7, 95-119